# EUROPÄISCHE PATENTSCHRIFT

(11) **EP 3 550 195 B1**
(45) Veröffentlichungstag und Bekanntmachung des Hinweises auf die Patenterteilung: **02.03.2022**
(21) Anmeldenummer: 19167257.5
(22) Anmeldetag: 04.04.2019
(51) Int. Cl.: F16L 13/10, F16L 21/00, F16L 21/02, F16L 21/03

(54) **ROHRANORDNUNG EINES ROHRLEITUNGSSYSTEMS EINER FEUERLÖSCHANLAGE UND VERFAHREN ZUM HERSTELLEN EINER SOLCHEN ROHRANORDNUNG**
PIPE ASSEMBLY OF A PIPING SYSTEM OF A FIRE EXTINGUISHING SYSTEM AND METHOD FOR MANUFACTURING SUCH A PIPE ASSEMBLY
DISPOSITIF TUBE D'UN SYSTÈME DE TUYAUTERIE D'UNE INSTALLATION D'EXTINCTION D'INCENDIE ET PROCÉDÉ DE FABRICATION D'UN TEL DISPOSITIF TUBE

(30) Priorität: 04.04.2018 DE 102018107959
(43) Veröffentlichungstag der Anmeldung: 09.10.2019
(73) Patentinhaber: Minimax GmbH, 23843 Bad Oldesloe (DE)
(72) Erfinder: Hofmann, Klaus, 23843 Bad Oldesloe (DE); Böke, Joachim, 23840 Bad Oldesloe (DE)
(74) Vertreter: Eisenführ Speiser

(56) Entgegenhaltungen:
- DE-A1- 2 217 488
- US-A- 5 584 512
- US-A1- 2010 025 982

## Beschreibung

Die Erfindung bezieht sich auf eine Rohranordnung eines Rohrleitungssystems einer Feuerlöschanlage gemäß dem Oberbegriff von Anspruch 1. Ferner betrifft die Erfindung auch ein Verfahren zum Herstellen einer Rohranordnung von zwei miteinander zu verbindenden Rohrleitungen eines Rohrleitungssystems einer Feuerlöschanlage.

Zum Verbinden bzw. Koppeln von medienführenden Rohrleitungen in der Sprinklertechnik werden üblicherweise Kupplungen oder Gewindeverbindungen eingesetzt. Mittels solcher Kupplungen oder Gewindeverbindungen soll zum einen eine feste mechanische Kopplung zwischen den Rohrleitungen einer Feuerlöschanlage bewirkt und zum anderen trotz der innerhalb des Rohrleitungssystems wirkenden Drücke eine Abdichtung nach außen gewährleistet werden. In seltenen Fällen kommen neben den bekannten Kupplungen auch Pressverbindungen zur Anwendung. Bei Rohrleitungssystemen, welche bereichsweise aus Kunststoff-Rohren ausgebildet werden, können die einzelnen Rohrleitungen auch über Schweiß- oder Klebeverbindungen miteinander verbunden werden.

Aus dem Stand der Technik sind beispielsweise Rohranordnungen bekannt, welche einen Hülsenkörper, der wenigstens einen ersten Endabschnitt und einen zweiten Endabschnitt umfasst, und zwei Rohrabschnitte aufweisen, wobei jeder Rohrabschnitt in einem Endabschnitt des Hülsenkörpers aufgenommen ist. Zwischen einer Innenseite des Hülsenkörpers und der Außenfläche des Rohrabschnittes ist ein Dichtelement angeordnet, insbesondere ein elastisches Dichtelement, mittels dessen die Abdichtung der Rohrabschnitte untereinander bzw. die Abdichtung zwischen der Außenfläche des Rohrabschnittes und der Innenseite des Hülsenkörpers bewirkt ist.

Eine derartige Rohranordnung ist beispielsweise aus US 5,584,512 A bekannt. Im Stoßbereich der beiden Rohrenden ist ein Dichtungsring vorgesehen, mit dem die Rohrenden jeweils stirnseitig und über die Rohraußenseite mit der Innenseite eines Hülsenkörpers abdichtend in Anlage stehen. Ferner sind an der Innenseite der Hülse Ringnuten vorgesehen, in denen Sprengringe angeordnet sind. Mit dem Einschieben der Rohrenden in die Hülse gehen die Sprengringe eine Formschlussverbindung mit korrespondierenden Ringnuten an der Außenseite eines jeweiligen Rohrendes ein. Ferner kann auf die Außenseite eines Rohrendes vor dem Einsetzen in die Hülse ein Klebstoff aufgetragen werden, der nach dem Einschieben in die Hülse aushärtet. Um einen wirksamen Stoffschluss zwischen der Außenfläche des Rohrendes und der Innenseite der Hülse zu gewährleisten, sind die Klebeflächen zu säubern und gegebenenfalls weiteren Vorbehandlungsschritten zu unterziehen. Das wirkt sich jedoch nachteilig auf die Montagezeiten einer solchen Rohrverbindung aus. Zudem besteht beim Zusammenführen des Rohrendes in den Hülsenkörper die Schwierigkeit, das auf die Außenfläche des Rohrendes aufgetragene Verbindungsmittel beim Einschieben nicht vorzeitig durch den auf der Außenfläche des Rohrendes anliegenden Sprengring zu entfernen, wodurch die Wirksamkeit des aufgetragenen Verbindungsmittels aufgehoben wäre.

US 2010/025982 A1 betrifft eine Kupplung zum Verbinden von Rohrleitungen sowie ein Verfahren zum Herstellen einer Rohrleitungsverbindung. Die Kupplung umfasst ein Verbindungsstück mit Einführenden für jeweils darin einschiebbare Rohrenden. Entlang der Einführenden sind axial zueinander beabstandete Dichtungen angeordnet. An jedem Einführende sind ferner mehrere über dessen Umfang verteilt angeordnete Öffnungen vorgesehen, über die Klebstoff als Verbindungsmittel zwischen die Innenseite des Einführendes und die Außenseite des eingeschobenen Rohrendes eingegeben wird.

Der Erfindung lag daher die Aufgabe zugrunde, eine Rohranordnung sowie ein Verfahren zum Herstellen einer Rohranordnung anzugeben, mittels denen verkürzte Montagezeiten der Rohranordnung und zudem eine hohe Wirksamkeit des Verbindungsmittels erreicht ist.

Die Erfindung löst die ihr zugrundeliegende Aufgabe in einem ersten Aspekt bei einer Rohranordnung eines Rohrleitungssystems einer Feuerlöschanlage mit den Merkmalen nach Anspruch 1. Insbesondere ist das Verbindungsmittel dazu eingerichtet, mit Aktivierung zwischen dem Hülsenkörper und den Rohrabschnitten eine Schweißverbindung auszubilden, wobei das Verbindungsmittel vorzugsweise ein auf der Innenseite des Hülsenkörpers und/oder der Außenfläche des Rohrabschnittes aufgetragener schweißbarer Kunststoff ist.

Erfindungsgemäß wird vorliegender Ansatz verfolgt, dass das Verbindungsmittel entweder kurz vor dem Einführen in den Hülsenkörper oder unmittelbar nach dem Einführen in den Hülsenkörper aktiviert und dadurch von seinem Transport- und/oder Lagerzustand in seinen Verbindungszustand überführt wird. Damit ist erreicht, dass die Eigenschaften des Verbindungsmittels erst kurz vor oder nach dem Fügen des Rohrabschnittes mit dem Hülsenkörper wirksam werden. Zum Fügen wird die Außenfläche des Rohrabschnittes mit der Innenseite des Hülsenkörpers zumindest abschnittsweise in Kontakt bzw. in Anlage gebracht. Bevorzugt wird der Rohrabschnitt bereits mit einem auf der Außenfläche aufgebrachten Verbindungsmittel an einen Montageort geliefert, wobei das Verbindungsmittel in seinem Transport- und Lagerzustand dementsprechend inaktiv ist. Vorzugsweise wird das Verbindungsmittel bei der Herstellung des Rohrabschnittes auf selbiges aufgebracht und erst bei Bedarf von seinem inaktiven Zustand in den aktiven Zustand versetzt. Im inaktiven Zustand weist das Verbindungsmittel nach außen hin noch keine für einen Stoffschluss typischen adhäsiven Eigenschaften auf. Die Innenseite ist vorzugsweise eine innere Umfangsseite des Hülsenkörpers. Die Außenfläche ist vorzugsweise eine äußere Umfangsfläche des Rohrabschnitts.

An der erfindungsgemäßen Rohranordnung ist mithilfe des Verbindungsmittels zwischen dem Hülsenkörper und den Rohrabschnitten eine Schweißverbindung ausgebildet. Darüber ist eine sichere mechanische Kopplung der zu verbindenden Bauteile (Hülsenkörper und Rohrabschnitt) und eine Arretierung der Bauteile zueinander erreicht. Nach dem Herstellen der Schweißverbindung ist eine Relativbewegung des Rohrabschnittes zum Hülsenkörper wirksam unterbunden. Neben einer mechanischen Arretierung kann mittels der Schweißverbindung zusätzlich neben dem zwischen der Außenfläche des Rohrabschnittes und der Innenseite des Hülsenkörpers eingesetzten Dichtelement eine Abdichtwirkung erzielt werden.

Bevorzugt ist das Verbindungsmittel ein auf der Innenseite des Hülsenkörpers und/oder der Außenfläche des Rohrabschnittes aufgetragener schweißbarer Kunststoff. Ein oder mehrere Abschnitte des Rohrabschnittes oder des Endabschnittes des Hülsenkörpers sind mit einem schweißbaren Kunststoff versehen. Bevorzugt ist das Verbindungsmittel über den gesamten Umfang an der Außenfläche des Rohrabschnittes oder der Innenseite des Hülsenkörpers aufgetragen. In einer Ausführungsform ist das Verbindungsmittel entlang eines Abschnittes in Längsrichtung des Rohrabschnittes und/oder des Hülsenkörpers aufgetragen. Der Abschnitt beträgt etwa ein Achtel bis etwa der Hälfte der Gesamtlänge der zwischen dem Rohrabschnitt und dem Hülsenkörper ausgebildeten Steckverbindung.

Gemäß einer Ausführungsform ist das Verbindungsmittel ein Ein- oder Mehrkomponentenkleber, vorzugsweise ein Zwei-Komponenten-Kleber. Bei einem Zwei-Komponenten-Kleber ist vorzugsweise vorgesehen, eine Komponente des Zwei-Komponenten-Klebers auf der Innenseite des Hülsenkörpers anzuordnen und die zweite Komponente des Zwei-Komponenten-Klebers auf einen korrespondierenden Abschnitt an der Außenfläche des Rohrabschnittes anzuordnen. Beim Montieren des Rohrabschnittes am Hülsenkörper gelangen die zwei Komponenten in Anlage miteinander und setzen damit die Aktivierung des Verbindungsmittels in Gang, sodass das Verbindungsmittel von dem Transport- und Lagerzustand in den Verbindungszustand überführt wird. Bevorzugt weisen die Komponenten des Zwei-Komponenten-Klebers für sich jeweils alleine eine nichthaftende Eigenschaft auf, wenn diese einzeln auf die entsprechenden Abschnitte von Rohrabschnitte und Hülsenkörper aufgebracht sind.

Gemäß einer bevorzugten Ausgestaltung der erfindungsgemäßen Rohranordnung ist an der Innenseite des Hülsenkörpers und an der Außenfläche des Rohrabschnittes jeweils ein Abschnitt einer konisch verlaufenden Verbindungsfläche vorgesehen. Damit ist beim Fügen, insbesondere bei Einschieben, des Rohrabschnittes in den Hülsenkörper erreicht, dass Flächenbereiche des Rohrabschnittes und Flächenbereiche des Endabschnittes des Hülsenkörpers unmittelbar aneinander anliegende Kontaktflächen haben. Bevorzugt kann ein Anpressdruck vorbestimmter Stärke auf die konisch verlaufenden Verbindungsflächen mit dem zumindest einseitig aufgetragenen Verbindungsmittel erzeugt werden, wodurch die Haftwirkung des Verbindungsmittels verbessert ist.

Vorzugsweise weist der Hülsenkörper eine sich in Richtung seiner Enden jeweils erweiternde konische Verbindungsfläche und die mit dem Hülsenkörper zu verbindenden Rohrabschnitte eine sich in Richtung des Rohrendes verjüngende Verbindungsfläche auf.

Bevorzugt ist nach einer Weiterbildung vorgesehen, dass das Verbindungsmittel durch eine entfernbare Schutzschicht abgedeckt ist, wobei die Schutzschicht dazu eingerichtet ist, das Verbindungsmittel im Transport- und/oder Lagerzustand von äußeren Einflüssen abzuschirmen. Mithilfe der Schutzschicht kann das Verbindungsmittel so lange wie nötig im inaktiven Zustand gehalten werden.

Zudem bietet die Schutzschicht ebenfalls einen aktiven Schutz vor einem möglichen Kontakt mit etwaigen Umwelteinflüssen, welche gegebenenfalls nachteiligen Einfluss auf die mittels des Verbindungsmittels erreichbaren Haftkräfte nehmen können. In einer Ausführungsform der Erfindung ist die Schutzschicht eine Schutzfolie, welche das Verbindungsmittel vollständig umgibt und damit das Verbindungsmittel bevorzugt vollständig eingeschlossen ist. Sofern das Verbindungsmittel auf dem Rohrabschnitt angebracht wurde, liegt die Schutzsicht an der dem Hülsenkörper zugewandten Seite. Sofern das Verbindungsmittel in dem Hülsenkörper eingebracht wurde, liegt die Schutzschicht an der dem Rohrabschnitt zugewandten Seite.

In einer Ausführungsform der Erfindung ist die Schutzfolie dazu ausgebildet, von dem Verbindungsmittel entfernt zu werden, während der Rohrabschnitt bereits in den Endabschnitt des Hülsenkörpers eingeschoben ist. Dadurch ist vermieden, dass das Verbindungsmittel beim Einschieben des Rohrabschnittes in den Hülsenkörper unbeabsichtigt von seiner designierten Position am Rohrabschnitt bzw. am Hülsenkörper verdrängt wird. Eine Aktivierung des Verbindungsmittels erfolgt demnach erst nach dem Einsetzen des Rohrabschnittes in den Endabschnitt des Hülsenkörpers mittels Abziehen der Schutzfolie. Hierzu weist die Schutzschicht vorzugsweise einen "Tab" oder ein vergleichbares Strukturelement auf, das sich von dem Verbindungsmittel und dem Hülsenkörper fort erstreckt und nach Einsetzen des Rohrabschnitts in den Hülsenkörper noch von außen zugänglich ist. Geeignete Dimensionierung des Rohrabschnitts und des Verbindungsmittels gewährleisten dann, dass die Schutzschicht an dem vorstehenden "Tab" zwischen Hülsenkörper und dem Rohrabschnitt herausgezogen werden kann, um das Verbindungsmittel zu aktivieren.

In einer bevorzugten Ausführungsform ist die entfernbare Schutzsicht zumindest eines von
- luftdicht,
- spritzwasserabweisend, oder
- undurchlässig für UV-Strahlung.

In einer bevorzugten Ausführungsform ist das Verbindungsmittel dazu ausgebildet, bei Entfernung der Schutzschicht in den Verbindungszustand überzugehen. Bei Klebstoff als Verbindungsmittel entfaltet sich vorzugsweise nach Entfernung der Schutzschicht die Haftwirkung gegenüber dem jeweils gegenüberliegenden Bauteil.

Gemäß einer bevorzugten Ausführungsform der Erfindung ist das Dichtelement in einer Vertiefung auf der Innenseite des Hülsenkörpers und/oder der Außenfläche des Rohrabschnittes angeordnet. Bevorzugt ist die Vertiefung nutartig ausgebildet und verläuft über den gesamten Umfang an der Innenseite des Hülsenkörpers und/oder der Außenfläche des Rohrabschnittes um. Die Vertiefung bildet eine Art Aufnahmeraum für das Dichtelement aus, der bevorzugt einen Dichtbereich mit der gegenüberliegend angeordneten Fläche von zum Beispiel dem Rohrabschnitt oder dem Hülsenkörper ausbildet.

Eine bevorzugte Weiterbildung der Erfindung sieht vor, dass die Innenseite des Hülsenkörpers und die Außenfläche des Rohrabschnittes einen Aufnahmeraum zum Aufnehmen des Verbindungsmittels definieren, wobei am Hülsenkörper eine mit dem Aufnahmeraum korrespondierende Öffnung zum Eingeben des Verbindungsmittels oder eines Initiators oder einer Komponente des Verbindungsmittels vorgesehen ist. Aus dem Aufnahmeraum kann in einer Ausführungsform beim Einführen des Rohrabschnittes in den Hülsenkörper Verbindungsmittel in einen benachbarten Flächenbereich nachströmen, der als Verbindungsbereich zwischen Rohr und Hülsenkörper wirkt. In einer weiteren Ausführungsform der Erfindung wird das Verbindungsmittel erst nachträglich in den zwischen der Innenseite des Hülsenkörpers und der Außenfläche des Rohrabschnittes vorhandenen Aufnahmeraum für das Verbindungsmittel eingegeben. Das Eingeben des Verbindungsmittels, stellt beispielsweise vorliegend das Aktivieren des Verbindungsmittels dar. Bevorzugt ist der Aufnahmeraum durch im Montagezustand der Rohranordnung deckungsgleich angeordnete nutartige Vertiefungen auf der Innenseite des Hülsenkörpers und der Außenfläche des Rohrabschnittes ausgebildet. Das Eingeben des Verbindungsmittels in den erfindungsgemäßen Aufnahmeraum erfolgt überwenigstens ein oder mehrere Einfüllöffnungen am Hülsenkörper, über die das Verbindungsmittel kontrolliert in den Aufnahmeraum appliziert werden kann.

In einer Ausführungsform befindet sich das Verbindungsmittel als Ein-Komponenten-Kleber in einer den Aufnahmeraum ausbildenden Vertiefung am Rohrabschnitt oder dem Hülsenkörper. Über die mit dem Aufnahmeraum korrespondierende Öffnung im Hülsenkörper wird ein Initiator, wie beispielsweise ein Radikalstarter, UV- oder WärmeStrahlung, eingegeben bzw. aufgebracht und wirkt auf das Verbindungsmittel, um das Aushärten des Verbindungsmittels zu starten.

Ebenso kann als Verbindungsmittel ein Zwei-Komponenten-Kleber verwendet werden, dessen eine Komponente bereits vorab in den Aufnahmeraum eingebracht wurde. Es kann dann über die Öffnung eine zweite Komponente des Zwei-Komponenten-Klebers eingegeben werden, die mit der im Aufnahmeraum befindlichen ersten Komponente reagiert.

Bevorzugt ist der Aufnahmeraum fluidleitend mit benachbarten Flächenbereichen zwischen der Innenseite und der Außenfläche verbunden, wodurch der Verbindungsbereich sich seitlich über den Aufnahmeraum für das Verbindungsmittel hinaus erstreckt. Bevorzugt bildet der Aufnahmeraum für das Verbindungsmittel einen Ringraum aus, der sich vollumfänglich zwischen dem Rohrabschnitt und dem Hülsenkörper erstreckt.

Gemäß einer Weiterbildung der erfindungsgemäßen Rohranordnung ist ein Arretierelement zum axialen Positionieren der Rohrabschnitte zum Hülsenkörper vorgesehen. Mithilfe des Arretierelements erfolgt das Arretieren bzw. Positionieren des in den Endabschnitt des Hülsenkörpers eingeschobenen Rohrabschnittes relativ zueinander. Das Arretierelement ist dazu eingerichtet, mit dem Einschieben und dem Erreichen einer Montagestellung des Rohrabschnittes im Hülsenkörper einen Formschluss mit beiden Bauteilen zu bewirken. Vorzugsweise ist das Arretierelement eine Art Sprengring, welcher mit entsprechend an der Außenfläche des Rohrabschnittes und der Innenseite des Hülsenkörpers vorgesehenen Ringnuten in Eingriff bringbar ist.

Gemäß einer bevorzugten Ausführungsform der Erfindung weist der Hülsenkörper wenigstens einen Anschlag für die in den Hülsenkörper eingeschobenen Rohrabschnitte auf, wobei der Anschlag vorzugsweise als radial nach innen vorstehender Absatz an der Innenseite des Hülsenkörpers ausgebildet ist. Mithilfe des Anschlags an der Innenseite des Hülsenkörpers ist die maximale Einschubtiefe für einen mit dem Hülsenkörper zu verbindenden Rohrabschnitt begrenzt. Dadurch ist gewährleistet, dass die Rohrabschnitte gleichmäßig, bevorzugt symmetrisch, innerhalb des Hülsenkörpers angeordnet sind. Dadurch ist eine dauerhaft wirksame Abdichtung der erfindungsgemäßen Rohranordnung gewährleistet. Der an der Innenseite des Hülsenkörpers ausgebildete Anschlag ist ein radial nach innen vorstehender Materialvorsprung, der einen Absatz im Innendurchmesser ausbildet. Bevorzugt stoßen die in den Hülsenkörper eingeschobenen Rohrabschnitte mit ihren Enden stumpf gegen eine kreisringförmige Anschlagfläche des Absatzes.

Vorzugsweise weisen die mittels des Verbindungsmittels ausgebildeten Verbindungsbereiche einen Abstand zum jeweiligen Ende des Rohrabschnittes auf, der größer ist als der Abstand des Dichtelementes zum Ende des Rohrabschnittes. Bevorzugt ist das Verbindungsmittel somit in Einschubrichtung des Rohrabschnittes hinter einem jeweiligen Dichtelement angeordnet. Das birgt den Vorteil, dass das Verbindungsmittel, wenn auf dem Rohrabschnitt aufgetragen, zuletzt in den Endabschnitt des Hülsenkörpers eingeschoben wird. Damit ist die auf die Außenseite des aufgetragenen Verbindungsmittels wirkende Reibung durch die sich relativ dazu bewegenden Flächenbereiche des Hülsenkörpers vergleichsweise gering.

Alternativ weisen die mittels des Verbindungsmittels ausgebildeten Verbindungsbereiche vorzugsweise einen Abstand zum jeweiligen Ende des Rohrabschnittes auf, der geringer ist als der Abstand des Dichtelementes zu einem jeweiligen Rohrende. Bevorzugt ist das Verbindungsmittel somit in Einschubrichtung des Rohrabschnittes vor einem jeweiligen Dichtelement angeordnet. In dieser Ausführungsform gelangt das Dichtelement, welches beispielsweise als ein elastisches Dichtelement ausgebildet ist, wie beispielsweise eine umlaufende Dichtlippe, wenn mittels der Stoffschlussverbindung, welche als Schweißverbindung ausgebildet ist, ebenfalls eine Abdichtfunktion erfüllt wird, nicht in Kontakt mit dem durch die Rohrleitungen strömenden Fluid. Eine Ausführungsform sieht vor, einen schweißbaren Kunststoff im Nahbereich des Rohrendes auf einen jeweiligen Rohrabschnitt aufzutragen, der nach dem Einschieben der Rohrenden in den Hülsenkörper durch Erwärmen des schweißbaren Kunststoffes verflüssigt wird und dadurch einen Stoffschluss zwischen den Rohrabschnitten und dem die Rohrabschnitte umgebenden Hülsenkörper erreicht ist.

Vorzugsweise weist das Verbindungsmittel in Umfangsrichtung des Rohrabschnittes sich im Wesentlichen in axialer Richtung ersteckende Kühlkanäle auf. Das Verbindungsmittel ist in Umfangsrichtung des Rohrabschnittes bevorzugt nur bereichsweise aufgetragen, wodurch eine ausschließlich mechanische Kopplung zwischen dem Hülsenkörper und den darin aufgenommenen Rohrabschnitten erzielt ist. Die Abdichtfunktion wird ausschließlich über das Dichtelement erzielt. Durch die Kühlkanäle strömt das Löschfluid in etwa axialer Richtung zu bevorzugt endseitig angeordneten Dichtelementen. Ein endseitig angeordnetes Dichtelement wird im Brandfall und damit beim Auslösen einer Feuerlöschanlage durch das strömende Löschfluid gekühlt. Dadurch wird die Funktionsfähigkeit des Dichtelements im Brandfall, welches einer übermäßigen Wärmeentwicklung ausgesetzt sein kann, verbessert. Bevorzugt sind in einem jeweiligen Verbindungsbereich in Umfangsrichtung zwischen der Außenfläche des Rohrabschnittes und der Innenseite des Hülsenkörpers wenigstens zwei, drei oder mehr voneinander getrennte Verbindungsbereiche vorgesehen. Bevorzugt sind die Durchtrittskanäle für das Löschfluid symmetrisch um die Längsachse der Rohranordnung herum angeordnet.

Gemäß einer bevorzugten Weiterbildung der Rohranordnung ist auf der Außenfläche des Hülsenkörpers eine Isolierung angeordnet. Insbesondere der Hülsenkörper und wenigstens ein benachbart zum Hülsenkörper angeordneter Bereich des Rohrabschnittes ist insbesondere mittels einer Isolierung eingehüllt. Der durch die Isolierung eingehüllte Bereich ist somit vor übermäßiger Wärmeeinwirkung bzw. schädlichen Auswirkungen eines Feuers geschützt. Im Brandfall ist eine hohe Funktionssicherheit der auf einem Stoffschluss basierenden Rohrverbindung erreicht. Die Isolierung ist mittels eines geeigneten Isoliermaterials ausgebildet, wie beispielsweise einem mineralischen Dämmmaterial oder einem auf Kunststoff basierenden Material.

Die Erfindung betrifft in einem zweiten Aspekt eine Feuerlöschanlage mit einem Rohrleitungssystem aus mehreren fluidleitend miteinander verbundenen medienführenden Rohrleitungen.

Die erfindungsgemäße Feuerlöschanlage löst die eingangs beschriebene Aufgabe, indem der Verbindungsbereich wenigstens zweier miteinander verbundener Rohrleitungen mittels einer Rohranordnung nach einer der vorstehend beschriebenen bevorzugten Ausführungsformen ausgebildet ist. Der Erfindung liegt die Erkenntnis zugrunde, dass eine Feuerlöschanlage mit einer Vielzahl erfindungsgemäß ausgebildeter Rohranordnungen, welche zum Verbinden einer Vielzahl von Rohrleitungen verwendet werden, sich vereinfacht montieren lässt. Bevorzugt werden als Rohrleitungen Kunststoff-Rohre oder Rohrleitungen aus Metall verwendet. Zudem ist eine hohe Funktionssicherheit der Feuerlöschanlage gewährleistet, deren Verbindungsbereiche ein aktivierbares Verbindungsmittel aufweisen, mit dem wenigstens die mechanische Kopplung der miteinander zu verbindenden Bauteile einer Rohranordnung erfolgt. Gemäß einer bevorzugten Ausführungsform der Erfindung kann der Hülsenkörper als zylindrischer Hülsenkörper ausgebildet sein, dessen Endabschnitte zum Verbinden der Rohrabschnitte koaxial angeordnet sind. Der Hülsenkörper kann aber auch eine abgewinkelte Ausrichtung der Endabschnitte aufweisen. Die Längsachsen der Endabschnitte können beispielsweise in einem Winkel im Bereich zwischen 1° und 89° zueinander verlaufend ausgerichtet sein. Der Hülsenkörper kann anstelle von zwei Endabschnitten zum Verbinden mit einem jeweiligen Rohrabschnitt auch als T-Verbinder oder X-Verbinder ausgebildet sein, mit denen drei oder mehr Rohrenden eines Rohrleitungssystems einer Feuerlöschanlage medienleitend miteinander verbunden sind.

Die Vorteile und bevorzugten Ausführungsformen gemäß dem ersten Aspekt sind zugleich Vorteile und bevorzugte Ausführungsformen des zweiten Aspekts, weshalb zur Vermeidung von Wiederholungen auf die obigen Ausführungen verwiesen wird.

Die Erfindung ist vorstehend in Bezug auf die Rohranordnung und eine Feuerlöschanlage beschrieben worden. In einem dritten Aspekt betrifft die Erfindung den Rohrverbinder selbst.

Die Erfindung schlägt einen Rohrverbinder für eine Rohranordnung eines Rohrleitungssystems einer Feuerlöschanlage mit miteinander verbundenen medienleitenden Rohrabschnitten vor, wobei der Rohrverbinder einen Hülsenkörper aufweist, der wenigstens einen ersten Endabschnitt zur Aufnahme eines ersten Rohrabschnitts der Rohranordnung und einen zweiten Endabschnitt zur Aufnahme eines zweiten Rohrabschnitts der Rohranordnung aufweist, wobei der Hülsenkörper eine Innenseite aufweist, an der ein Dichtelement angeordnet ist, wobei an der Innenseite des Hülsenkörpers ein Verbindungsmittel angeordnet ist, das zur Verbindung mit einer Außenfläche des jeweiligen Rohrabschnitts eingerichtet ist, wobei das Verbindungsmittel einen Transport- und/oder Lagerzustand aufweist, in dem eine Relativbewegung zwischen den Rohrabschnitten und dem Hülsenkörper möglich ist, und dazu eingerichtet ist, mittels Aktivierung von dem Transport- und/oder Lagerzustand in einen Verbindungszustand überzugehen, in dem das Verbindungsmittel die Außenfläche des jeweiligen Rohrabschnitts mit der Innenseite des Hülsenkörpers stoffschlüssig verbindet.

Die Vorteile und bevorzugten Ausführungsformen der Rohranordnung und des Feuerlöschsystems des ersten und zweiten Aspekts sind zugleich Vorteile und bevorzugte Ausführungsformen des Rohrverbinders, weshalb zur Vermeidung von Wiederholungen auf die obigen Ausführungen verwiesen wird.

In einer Ausführungsform des Rohrverbinders ist das Verbindungsmittel ein Ein- oder Mehrkomponenten-Kleber, insbesondere ein Zweikomponentenkleber.

Bei einem Zwei-Komponenten-Kleber ist vorzugsweise eine Komponente des Zwei-Komponenten-Klebers auf der Innenseite des Hülsenkörpers angeordnet, während die zweite Komponente des Zwei-Komponenten-Klebers auf der Außenfläche des jeweiligen Rohrabschnittes angeordnet ist, der in den Rohrverbinder eingesetzt werden soll, vgl. obige Ausführungen zur Rohranordnung. Beim Montieren des Rohrabschnittes am Hülsenkörper gelangen die zwei Komponenten in Anlage miteinander und setzen damit die Aktivierung des Verbindungsmittels in Gang, sodass das Verbindungsmittel von dem Transport- und Lagerzustand in den Verbindungszustand überführt wird.

Bevorzugt weisen die Komponenten des Zwei-Komponenten-Klebers für sich jeweils alleine eine nichthaftende Eigenschaft auf, wenn diese einzeln auf die entsprechenden Abschnitte von Rohrabschnitte und Hülsenkörper aufgebracht sind.

Alternativ oder zusätzlich sind die Komponenten des Verbindungsmittels jeweils mittels einer Schutzfolie abgedeckt, die insbesondere gemäß einer der vorstehend beschriebenen bevorzugten Ausführungsformen ausgebildet ist.

Die Erfindung betrifft gemäß einem vierten Aspekt ein Verfahren zum Herstellen einer Rohranordnung von zwei miteinander zu verbindenden Rohrleitungen eines Rohrleitungssystems einer Feuerlöschanlage. Die Rohranordnung ist nach einer der vorstehend beschriebenen bevorzugten Ausführungsformen der ersten, zweiten und dritten Aspekte ausgebildet.

Das erfindungsgemäße Verfahren löst ebenfalls die eingangs beschriebene Aufgabe mit den Schritten: Bereitstellen zweier miteinander zu verbindender Rohrabschnitte und eines Hülsenkörpers zum abschnittsweisen Aufnehmen der Rohrabschnitte, Fügen der Rohrabschnitte mit den Hülsenkörper, und Aktivieren eines auf einer Innenseite des Hülsenkörpers und/oder einer Außenfläche des Rohrabschnittes angeordneten Verbindungsmittels vor oder nach dem Fügen und Überführen des Verbindungsmittels von einem Transport- und/oder Lagerzustand in einen Verbindungszustand und Ausbilden einer Schweißverbindung zwischen dem Hülsenkörper und den Rohrabschnitten, so dass die Innenseite des Hülsenkörpers mit der Außenfläche des Rohrabschnittes mittels des aktivierten Verbindungsmittels zumindest partiell stoffschlüssig verbunden wird. Mit Hilfe der erfindungsgemäßen Verfahrensschritte wird ein auf einem Abschnitt der Außenfläche eines Rohrabschnittes bzw. auf dem Abschnitt der Innenseite des Hülsenkörpers aufgebrachtes Verbindungsmittel derart vorbereitet, insbesondere aktiviert, dass es erst kurz vor dem Einführen eines Rohrabschnittes in den Hülsenkörper oder nach dem Einführen des Rohrabschnittes in den Hülsenkörper seine Haftkräfte erhält. Das Verbindungsmittel wird somit von einem Zustand, in dem das Verbindungsmittel inaktiv ist und somit keine Haftkräfte auf eine gegenüberliegend angeordnete Verbindungsfläche wirken, in einen Zustand überführt, in dem das auf die Außenfläche des Rohrabschnittes und/oder die Innenseite des Hülsenkörpers aufgebrachte Verbindungsmittel nunmehr Adhäsionskräfte zu der benachbarten Verbindungsfläche des gegenüberliegend angeordneten Bauteils aufbauen kann.

Eine bevorzugte Weiterbildung des erfindungsgemäßen Verfahrens sieht den Schritt vor: Fixieren des Rohrabschnittes und des Hülsenkörpers zueinander nach dem Fügen des Rohrabschnittes mit dem Hülsenkörper bis zum Einstellen der zumindest partiellen stoffschlüssigen Verbindung zwischen der Innenseite des Hülsenkörpers und der Außenfläche des Rohrabschnittes. Vorzugsweise werden der Rohrabschnitt und der Hülsenkörper unmittelbar vor oder nach dem Aktivieren des Verbindungsmittels zueinander fixiert. Gemäß einer Ausführungsform werden Rohrabschnitt und Hülsenkörper so lange zueinander fixiert, wie das Verbindungsmittel noch flüssig ist, bzw. bis sich die zumindest partiell stoffschlüssige Verbindung zwischen der Innenseite des Hülsenkörpers und der Außenfläche des Rohrabschnittes eingestellt hat. Vorzugsweise erfolgt das Fixieren unter Verwendung einer Fixiervorrichtung, welche den Hülsenkörper, bezogen auf zumindest einen Rohrabschnitt, in axialer Richtung und/oder in Umfangsrichtung der Außenfläche des Rohrabschnittes festlegt.

Gemäß einer bevorzugten Ausgestaltung umfasst das erfindungsgemäße Verfahren zum Aktivieren des Verbindungsmittels vor oder nach dem Verbinden der Rohrabschnitte mit dem Hülsenkörper einen, mehrere oder sämtliche der nachfolgenden Schritte: a) Entfernen einer das Verbindungsmittel abdeckenden Schutzschicht, und b) Erzeugen von Wärme am Verbindungsmittel, sodass das Verbindungsmittel verflüssigt und abschließendes Abkühlen des Verbindungsmittels zum Verfestigen des Verbindungsmittels.

Zum Aktivieren wird somit entweder eine Schutzschicht, wie beispielsweise eine Schutzfolie, an einem auf beispielsweise einem Rohrende eines Rohrabschnittes aufgebrachten Verbindungsmittel, insbesondere einem Klebstoff, entfernt. In einer alternativen Ausführungsform wird ein bereits auf ein Rohrende eines Rohrabschnittes aufgebrachter schweißbarer Kunststoff nach dem Fügen des Rohrabschnittes mit dem Hülsenkörper durch Wärmeeintrag in den Bereich am Hülsenkörper verflüssigt, sodass der verflüssigte Kunststoff sich mit der beispielsweise zuvor nicht verbundenen Innenseite des Hülsenkörpers verbindet. Anschließend wird der verflüssigte Kunststoff wieder abgekühlt, wodurch eine dauerhaft feste Verbindung zwischen Rohrabschnitt und Hülsenkörper erzeugt ist. In einer weiteren Ausführungsform wird ein Ein-Komponentenkleber oder ein Initiator für einen Ein-Komponentenkleber oder eine Komponente eines Zwei-Komponentenklebers über eine Öffnung, wie beispielsweise eine Einfüllöffnung, in einem Bereich des Hülsenkörpers in eine zwischen der Innenseite des Hülsenkörpers und der Außenfläche des Rohrabschnittes ausgebildeten Aufnahmeraum eingegeben. Bevorzugt gelangt das in den Aufnahmeraum eingegebene Verbindungsmittel vollumfänglich mit der Innenseite des Hülsenkörpers und der Außenfläche der Rohrabschnitte in Kontakt und härtet im Aufnahmeraum aus. Ein über die Öffnung eingebrachter Initiator gelangt mit einem bereits im Aufnahmeraum befindlichen Verbindungsmittel oder eine zweite Komponente eines Zwei-Komponentenklebers mit einer bereits im Aufnahmeraum befindlichen ersten Komponente des Zwei-Komponentenklebers in Kontakt. Als Initiator für einen Ein-Komponentenkleber wird beispielsweise ein Radikalstarter, UV- oder WärmeStrahlung zum Aushärten des Verbindungsmittels verwendet.

Die zur erfindungsgemäßen Rohranordnung beschriebenen bevorzugten Ausführungsformen bzw. Weiterbildungen sind zugleich auch bevorzugte Ausführungsformen der erfindungsgemäßen Feuerlöschanlage sowie des erfindungsgemäßen Verfahrens zum Herstellen einer Rohranordnung.

Gemäß einem weiteren Aspekt bezieht sich die Erfindung auch auf ein System zur Rohrinstallation, mit einer Rohranordnung gemäß einer der vorstehend beschriebenen bevorzugten Ausführungsformen und einer Vorrichtung zum Fixieren von zumindest einem Rohrabschnitt und einem mit dem Rohrabschnitt zu verbindenden Hülsenkörper. Das erfindungsgemäße System löst ebenfalls die eingangs beschriebene Aufgabe, indem die Fixiervorrichtung zumindest ein auf dem Rohrabschnitt und den Hülsenkörper einwirkendes Fixiermittel aufweist, das dazu eingerichtet ist, den Rohrabschnitt und den Hülsenkörper in axialer Richtung und/oder in Umfangsrichtung ihrer einanderzugewandten Innenseite und Außenfläche zumindest temporär zueinander festzulegen.

Mithilfe der Vorrichtung zum Fixieren können der Rohrabschnitt und der mit dem Rohrabschnitt zu verbindende Hülsenkörper bis zum Einstellen einer zumindest partiellen stoffschlüssigen Verbindung zwischen der Innenseite des Hülsenkörpers und der Außenfläche des Rohrabschnittes in axialer Richtung und/oder in Umfangsrichtung ihrer einander zugewandten Innenseite und Außenfläche temporär zueinander festgelegt werden. Damit ist einer ungewollten Relativbewegung von Rohrabschnitt und Hülsenkörper zueinander beim Einstellen des Stoffschlusses wie beispielsweise dem Aushärten bzw. Verfestigen eines Verbindungsmittels entgegengewirkt. Das Herstellen einer solchen Stoffschlussverbindung an einer oben angeführten Rohranordnung kann am Installationsort vorgenommen werden. Dabei ist es nicht notwendig, dass ein Monteur den Rohrabschnitt und den Hülsenkörper von Hand zueinander fixiert, bis sich der Stoffschluss zwischen den Bauteilen eingestellt hat. Dadurch kann die Montagezeit verkürzt und eine erhöhte Festigkeit in der Verbindung zwischen den miteinander stoffschlüssig zu fügenden Bauteilen erzielt werden.

Gemäß einer bevorzugten Weiterbildung ist vorgesehen, dass das Fixiermittel als Klemmeinrichtung ausgebildet ist, welche dazu eingerichtet ist, auf eine Außenfläche des Hülsenkörpers und eine im Wesentlichen deckungsgleich zur Außenfläche des Hülsenkörpers angeordnete Innenseite des Rohrabschnittes oder auf einander gegenüberliegenden Außenflächen des Hülsenkörpers eine Klemmkraft aufzubringen. Bevorzugt liegen die zueinander festzulegenden Flächen der Bauteile unmittelbar aneinander an. In einer bevorzugten Ausführungsform der Erfindung ist das als Klemmeinrichtung ausgebildete Fixiermittel eine Zange, welche über ein Gelenk miteinander verbundene Klemmschenkel aufweist, die mit von jeweils einer Seite mit Bereichen zu fixierenden Bauteile in Wirkverbindung bringbar sind. Vorzugsweise weist die Klemmeinrichtung eine Arretiereinheit auf, mittel der die Klemmschenkel unter Beibehaltung einer voreingestellten Klemmkraft zueinander arretiert werden können. Damit kann über die Klemmeinrichtung eine Klemmwirkung erzeugt und aufrechterhalten werden, ohne die Klemmeinrichtung weiter aktiv von Hand betätigen zu müssen.

Eine alternative Ausführungsform der Erfindung sieht vor, dass das Fixiermittel ein um den Außenumfang des Hülsenkörpers herumlegbares Spannelement aufweist, vorzugsweise eine Spannkette, wobei dem Spannelement eine dessen Spannlänge veränderbare Spanneinrichtung zugeordnet ist, und wobei entlang des Spannelementes wenigstens ein Arretierteil angeordnet ist, das mit Spannen der Spanneinrichtung den Hülsenkörper in Dickenrichtung zumindest bereichsweise durchdringt und auf die Außenfläche des Rohrabschnittes einwirkt. Statt einer rein auf Kraftschluss basierenden Reibschlussverbindung zum Fixieren von Rohrabschnitt und Hülsenkörper zueinander vorzusehen, wird mit dieser Ausführungsform der erfindungsgemäßen Fixiervorrichtung ein Arretierteil bevorzugt mit der Außenfläche des Rohrabschnittes in Kontakt gebracht. Das oder die Arretierteile werden vorzugsweise durch Verändern der Spannlänge des Spannelementes auf der Außenfläche des Rohrabschnittes fixiert. Vorzugsweise greift das Arretierteil bzw. greifen die mehreren Arretierteile durch den Hülsenkörper bis auf die Außenfläche des Rohrabschnittes hindurch. Die Spannlänge des Spannelementes wird bevorzugt durch Einwirken der Spanneinrichtung auf den Hülsenkörper verkürzt, wobei der Hülsenkörper gegen das um den Außenumfang des Hülsenkörpers herumgelegte Spannelement gedrückt wird.

In einer bevorzugten Ausführungsform ist das Arretierteil als Dorn ausgebildet, der dazu eingerichtet ist, sofern der Hülsenkörper entsprechende Eigenschaften hinsichtlich seiner Festigkeit aufweist, beim Spannen des Spannelementes um den Außenumfang des Hülsenkörpers herum Materialbereiche des Hülsenkörpers zu durchdringen.

Die Erfindung wird im Folgenden anhand bevorzugter Ausführungsbeispiele unter Bezugnahme auf die beigefügten Figuren näher beschrieben. Hierbei zeigen:
- Fig. 1:: eine schematische Ansicht einer Rohranordnung gemäß einem ersten Ausführungsbeispiel im Schnitt;
- Fig. 2:: eine schematische Ansicht einer erfindungsgemäßen Rohranordnung gemäß einem zweiten Ausführungsbeispiel im Schnitt;
- Fig. 3:: eine schematische Ansicht einer erfindungsgemäßen Rohranordnung gemäß einer weiteren Ausführungsform im Schnitt;
- Fig.4:: eine schematische Ansicht einer erfindungsgemäßen Rohranordnung gemäß einer weiteren Ausführungsform im Schnitt, und
- Fig. 5:: eine Ansicht einer Ausführungsform einer erfindungsgemäßen Vorrichtung zum Fixieren einer Rohranordnung.

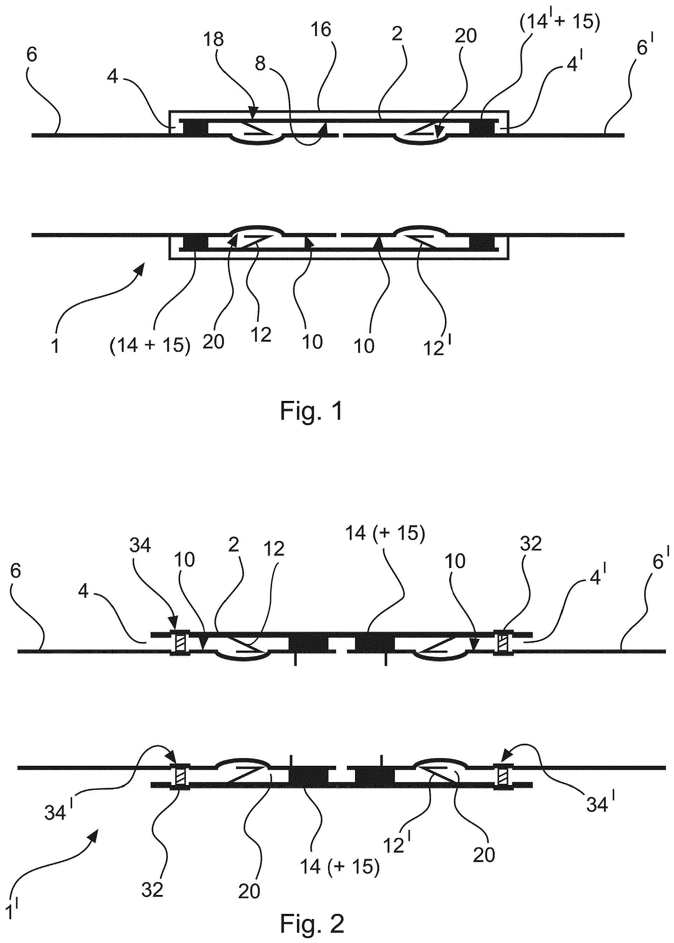

Fig. 1 zeigt eine Rohranordnung 1 mit einem Hülsenkörper 2, der einander gegenüberliegende Endabschnitte 4, 4' aufweist. In jedem der Endabschnitte 4, 4' ist ein Rohrabschnitt 6, 6' abdichtend aufgenommen. An einer Innenseite 8 des Hülsenkörpers 2 und einer Außenfläche 10 eines jeweiligen Rohrabschnittes 6, 6' ist jeweils ein Dichtelement 12, 12' angeordnet, mittels dessen insbesondere die medienleitende Abdichtung der Rohranordnung 1 gewährleistet ist. Ferner ist zwischen der Innenseite 8 des Hülsenkörpers 2 und den Außenflächen 10 der Rohrabschnitte 6, 6' ein Verbindungsmittel 14, 14' angeordnet. Mittels der Verbindungsmittel 14, 14' werden die Rohrabschnitte 6, 6'jeweils relativ zum Hülsenkörper 2 arretiert.

In einer Ausführungsform ist das Verbindungsmittel 14, 14' dazu eingerichtet, neben einer Arretierung der Rohrabschnitte relativ zum Hülsenkörper die Innenseite 8 des Hülsenkörpers 2 zu den Außenflächen 10 der Rohrabschnitte 6, 6' abzudichten. Die Verbindungsmittel 14, 14' werden mittels Aktivierung von einem Transport- und/oder Lagerzustand in einen Verbindungszustand gebracht oder überführt, um eine Verbindung zwischen der Innenseite 8 und den Außenflächen 10 zu bewirken.

Die Verbindungsmittel 14, 14' sind in einer möglichen Ausführungsform als ein auf der Innenseite 8 des Hülsenkörpers 2 und/oder den Außenflächen 10 der Rohrabschnitte 6, 6' aufgetragener Klebstoff oder aufgetragener, schweißbarer Kunststoff ausgebildet. In der in Fig. 1 gezeigten Ausführungsform sind die Verbindungsmittel 14, 14' in einem Abstand zum Ende eines jeweiligen Rohrabschnittes 6, 6' angeordnet, der größer ist als der Abstand der Dichtelemente 12, 12' zum Ende eines jeweiligen Rohrabschnittes 6, 6'. Ferner ist eine Isolierung 16 vorgesehen, welche auf einer Außenfläche 18 des Hülsenkörpers 2 angeordnet ist.

Fig. 2 zeigt eine zweite Ausführungsform einer erfindungsgemäßen Rohranordnung 1', welche ebenfalls einen Hülsenkörper 2 und darin endseitig aufgenommene Rohrabschnitte 6, 6' umfasst. Die Endabschnitte 4, 4' des Hülsenkörpers 2 sind in der vorliegenden Ausführungsform koaxial angeordnet. In einer anderen Ausführungsform kann der Hülsenkörper auch abgewinkelt sein, sodass die Mittenachsen der Endabschnitte 4, 4' in einem Winkel zwischen 1° und 90° zueinander verlaufen.

In einer bevorzugten Ausführungsform kann der Hülsenkörper auch als T-Verbinder oder X-Verbinder ausgebildet sein, wobei ein T-Verbinder insbesondere drei Endabschnitte zum Aufnehmen eines jeweiligen Rohrabschnittes und ein X-Verbinder vier in Winkeln zueinander verlaufende Endabschnitte zum Aufnehmen von Rohrabschnitten aufweist. Im Gegensatz zur Ausführungsform nach Fig. 1 sind die Verbindungsmittel 14,14' in einem Abstand zum Ende eines jeweiligen Rohrabschnittes 6, 6' angeordnet, der geringer ist als der Abstand der Dichtelemente 12, 12' zu einem jeweiligen Ende der Rohrabschnitte 6, 6'. Die Verbindungsmittel 14, 14' sind somit in Einschubrichtung der Rohrabschnitte 6, 6' vor den Dichtelementen 12, 12' angeordnet. In der vorliegenden Ausführungsform ist der Hülsenkörper nicht durch eine Isolierung eingeschlossen, was jedoch in einer Ausführung möglich ist.

Auch die in Fig. 2 gezeigten Verbindungsmittel 14, 14' sind von einem Transport- und/oder Lagerzustand durch eine entsprechende Aktivierung in einen Verbindungszustand überführbar, sodass die Innenseite 8 des Hülsenkörpers 2 mit den Außenflächen 10 der Rohrabschnitte 6, 6' verbunden wird. Die Verbindungsmittel 14, 14' aus Fig. 2 können, obwohl nicht im Detail dargestellt, in axialer Richtung verlaufende Durchtrittskanäle haben, sodass das durch die Rohrabschnitte strömende Fluid, insbesondere ein Löschfluid, in Kontakt mit den zwischen den Außenflächen 10 und der Innenseite 8 in Ausströmrichtung des Löschfluids hinter den Verbindungsmitteln 14, 14' angeordneten Dichtelementen 12, 12' gelangt.

Wie aus Fig. 1 und 2 ersichtlich, sind die Dichtelemente 12, 12' jeweils in nutartigen Vertiefungen 20 an den Außenflächen 10 der Rohrabschnitte 6, 6' angeordnet. Auch das Verbindungsmittel 14, 14' kann beispielsweise in ähnlichen Vertiefungen an zum Beispiel den Außenflächen 10 der Rohrabschnitte und/oder Bereichen der Innenseite 8 des Hülsenkörpers 2' aufgenommen sein. In einer Ausführungsform kann das Verbindungsmittel 14, 14' ein Zwei-Komponenten-Kleber sein, wobei jeweils die erste Komponente auf der Außenfläche 10 eines jeweiligen Rohrabschnittes 6, 6'und die zweite Komponente auf der Innenseite 8 des Hülsenkörpers 2 aufgetragen wird.

Ferner kann zum Aktivieren des Verbindungsmittels, das ein Klebestoff sein kann, das Verbindungsmittel im Transport- und/oder Lagerzustand durch eine entfernbare Schutzschicht abgedeckt 15 sein, welche zum Aktivieren des Verbindungsmittels einfach entfernt wird. Das Entfernen der Schutzschicht 15 kann vor dem Einsetzen der Rohrabschnitte 6, 6' in den Hülsenkörper 2 oder erst nach dem Einsetzen der Rohrabschnitte in den Hülsenkörper erfolgen. Alternativ wirkt bei einem schweißbaren Kunststoff als Verbindungsmittel Wärme auf einen zugeordneten Bereich des Hülsenkörpers 2 ein. In der in Fig. 2 gezeigten Ausführung ist an jedem Rohrabschnitt 6, 6' jeweils ein mit einem Abschnitt des Hülsenkörpers 2 zusammenwirkendes Arretierelement 32 vorgesehen, das in als Ringnut ausgebildete Ausnehmungen 34, 34' auf der Innenseite 8 des Hülsenkörpers 2 zu den Außenflächen 10 der Rohrabschnitte 6, 6' eingreift.

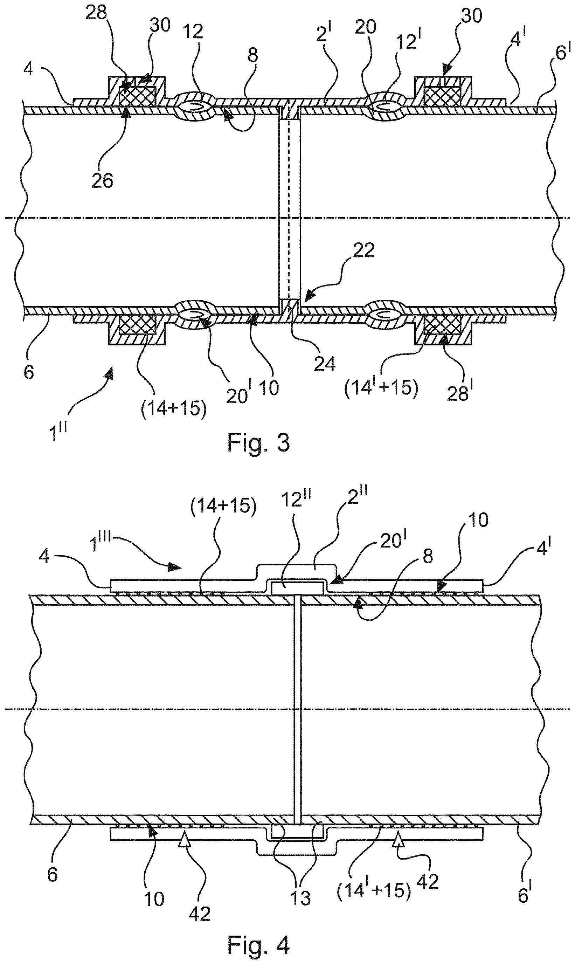

Fig. 3 zeigt eine weitere Ausführungsform einer erfindungsgemäßen Rohranordnung 1", welche einen Hülsenkörper 2' umfasst. An dem Hülsenkörper 2' sind endseitig ebenfalls Rohrabschnitte 6, 6' eingesetzt. Der Hülsenkörper 2' weist einen Anschlag 22 auf, der in Längsrichtung des Hülsenkörpers etwa auf der Hälfte ausgebildet ist. Der Anschlag 22 ist ein an der Innenseite 8 des Hülsenkörpers 2' vorstehender Materialvorsprung 24 in Form eines Absatzes an der Innenseite 8 des Hülsenkörpers. Über den Anschlag 22 wird die Einsetztiefe für die Rohrabschnitte 6, 6' begrenzt.

An den Außenflächen der Rohrabschnitte 6, 6'und der Innenseite 8 des Hülsenkörpers 2' sind jeweils nutartige Vertiefungen 20, 26 vorgesehen. Mittels der Vertiefungen 20, 26 werden insbesondere Aufnahmeräume 28, 28' für die Dichtelemente 12, 12' und die Verbindungsmittel 14, 14' ausgebildet. In der in Fig. 3 gezeigten Ausführungsform weist der Hülsenkörper 2' im Bereich der den Aufnahmeraum 28, 28' für das Verbindungsmittel ausbildenden Vertiefung 26 eine die Wandung des Hülsenkörpers durchdringende Öffnung 30 auf. Über die Öffnung 30 kann das Verbindungsmittel 14, 14' nach dem Zusammensetzen der Rohranordnung 1" in den Aufnahmeraum 28, 28' eingegeben werden.

Figur 4 zeigt eine weitere Ausführungsform einer erfindungsgemäßen Rohranordnung 1‴ mit einem Hülsenkörper 2", in den jeweils endseitig in dessen Endabschnitte 4, 4' zwei Rohrabschnitte 6, 6' eingeschoben sind. Die Innenseite 8 des Hülsenkörpers 2" steht dann zumindest partiell in Anlage mit der Außenfläche 10 eines jeweiligen Rohrabschnittes 6, 6'. Entgegen der vorherigen Ausführungsformen weist der Hülsenkörper 2" ein zentral angeordnetes Dichtelement 12" auf, das gegenüber beiden Enden 13 der Rohrabschnitte 6, 6' gleichzeitig abdichtet. Nachdem die Rohrabschnitte in den Hülsenkörper 2" eingesetzt sind, erfolgt die Aktivierung des Verbindungsmittels 14, 14' zwischen der Innenseite 8 des Hülsenkörpers 2" und den Außenflächen 10 der Rohrabschnitte 6, 6'.

Um ein axiales Verschieben der Rohrabschnitte 6, 6' relativ zum Hülsenkörper 2" oder ein Verdrehen der Rohrabschnitte in Umfangsrichtung im Hülsenkörper 2" zu vermeiden, werden die Rohrabschnitte 6, 6' und der Hülsenkörper 2", während des Einstellens der zumindest partiell stoffschlüssigen Verbindung zwischen dem Hülsenkörper und den Rohrabschnitten, relativ zueinander fixiert.

Wie in Fig. 4 angedeutet, kann das Fixieren des Hülsenkörper 2" relativ zu den Rohrabschnitten 6, 6' mittels ein oder mehrerer Arretierteile 42 erfolgen. In einer Ausführungsform kann der Hülsenkörper 2" eine Materialfestigkeit aufweisen, die von den dornartigen Arretierteilen 42 in Dickenrichtung zumindest bereichsweise durchdrungen wird. Die Arretierteile 42 stehen dann bevorzugt direkt mit der Außenfläche 10 der Rohrabschnitte 6, 6' in Wirkverbindung. In einer Ausführungsform der Erfindung kann der Hülsenkörper 2" in seiner Wandungsfläche in Dickenrichtung verlaufend auch vorgefertigte Ausnehmungen zum Durchgreifen der Arretierteile 42 aufweisen.

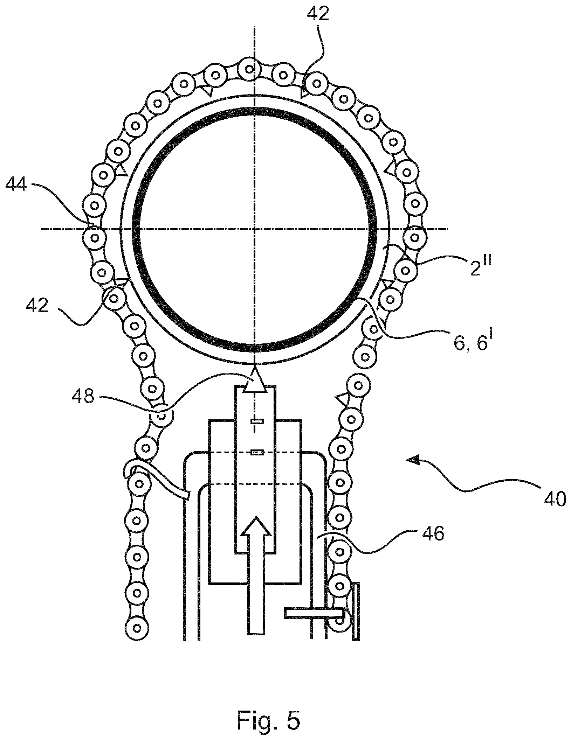

In Fig. 5 ist eine mögliche Ausführungsform einer zum Einsatz kommenden Fixiervorrichtung 40 gezeigt, welche zumindest ein um den Außenumfang des Hülsenkörpers 2" herumlegbares Spannelement 44 aufweist, an dem in vorbestimmten Abständen entlang des Spannelementes mehrere Arretierteile 42 angeordnet sind. Die Fixiervorrichtung 40 umfasst ferner eine verstellbare Spanneinrichtung 46 mit einem beweglich gelagerten Spannstift 48, der von einer Seite auf das von dem Spannelement umschlungenen Hülsenkörper 2" aus eine Druckkraft ausübt. Dadurch wird der Hülsenkörper 2" gegen die Arretierteile 42 des Spannelementes 44 gedrückt. Der Spannstift 48 wird mittels einer nicht näher dargestellten Antriebseinheit, wie beispielsweise einem verstellbaren Kolben, bewegt.

Anstelle einer vorbeschriebenen Fixiervorrichtung 31 kann zum Fixieren der Rohrabschnitte 6, 6' und des Hülsenkörpers relativ zueinander auch ein eine Art Feststellzange verwendet werden. Mittels der Feststellzange wird bevorzugt eine Klemmkraft auf der Innenseite eines Rohrabschnittes 6, 6' und einer etwa gegenüberliegenden Außenfläche des Hülsenkörpers 2" erzeugt. mittels der Bereich der Innenseite des Hülsenkörpers und die Außenfläche des entsprechenden Rohrabschnittes mittels der wirkenden Flächenpressung festgelegt sind.

## Patentansprüche

1. Rohranordnung (1, 1', 1ʺ, 1‴) eines Rohrleitungssystems einer Feuerlöschanlage mit miteinander verbundenen medienleitenden Rohrabschnitten, mit einem Hülsenkörper (2, 2', 2"), der wenigstens einen ersten Endabschnitt (4) und einen zweiten Endabschnitt (4') aufweist,
zwei Rohrabschnitten (6, 6'), wobei jeder Rohrabschnitt (6, 6') an einem Endabschnitt (4, 4') des Hülsenkörpers (2, 2', 2") aufgenommen ist, und
einem zwischen einer Innenseite (8) des Hülsenkörpers (2, 2', 2") und einer Außenfläche (10) des Rohrabschnittes (6, 6') angeordneten Dichtelement (12, 12', 12"),
mit einem zwischen der Innenseite des Hülsenkörpers (2, 2', 2") und der Außenfläche des Rohrabschnittes (6, 6') angeordneten Verbindungsmittel (14, 14'),
wobei das Verbindungsmittel (14, 14') einen Transport- und/oder Lagerzustand aufweist, in dem eine Relativbewegung zwischen den Rohrabschnitten (6, 6') und dem Hülsenkörper (2, 2′, 2ʺ) möglich ist, und das mittels Aktivierung von dem Transport- und/oder Lagerzustand in einen Verbindungszustand bringbar ist, wobei das Verbindungsmittel (14, 14') in dem Verbindungszustand dazu eingerichtet ist, eine Außenfläche (10) des jeweiligen Rohrendes mit der Innenseite (8) des Hülsenkörpers (2, 2′, 2ʺ) stoffschlüssig zu verbinden, **dadurch gekennzeichnet, dass** das Verbindungsmittel (14, 14') dazu eingerichtet ist, mit Aktivierung zwischen dem Hülsenkörper (2, 2', 2") und den Rohrabschnitten (6, 6') eine Schweißverbindung auszubilden, wobei das Verbindungsmittel (14, 14') vorzugsweise ein auf der Innenseite des Hülsenkörpers (2, 2', 2") und/oder der Außenfläche des Rohrabschnittes (6, 6') aufgetragener schweißbarer Kunststoff ist.

2. Rohranordnung (1, 1', 1ʺ, 1‴) nach Anspruch 1,
**dadurch gekennzeichnet, dass** das Verbindungsmittel (14, 14') durch eine entfernbare Schutzschicht (15) abgedeckt ist, wobei die Schutzschicht dazu eingerichtet ist, das Verbindungsmittel im Transport- und/oder Lagerzustand vor äußeren Einflüssen abzuschirmen.

3. Rohranordnung nach Anspruch 2,
wobei die Schutzschicht als Schutzfolie ausgebildet ist, welche das Verbindungsmittel vollständig umgibt, wobei vorzugsweise die Schutzfolie dazu ausgebildet ist, von dem Verbindungsmittel entfernt zu werden, während der Rohrabschnitt bereits in den Endabschnitt des Hülsenkörpers eingeschoben ist.

4. Rohranordnung nach Anspruch 2 oder 3,
wobei die entfernbare Schutzsicht zumindest eines von
- luftdicht,
- spritzwasserabweisend, oder
- undurchlässig für UV-Strahlung ist.

5. Rohranordnung (1, 1', 1ʺ, 1‴) nach einem der vorstehenden Ansprüche,
**dadurch gekennzeichnet, dass** das Dichtelement (12, 12′, 12ʺ) in einer Vertiefung (20, 20') auf der Innenseite (8) des Hülsenkörpers (2, 2', 2") und/oder der Außenfläche (10) des Rohrabschnittes (6, 6') angeordnet ist.

6. Rohranordnung (1, 1', 1ʺ, 1‴) nach einem der vorstehenden Ansprüche,
ferner aufweisend ein Arretierelement zum axialen Positionieren der Rohrabschnitte (6, 6') zum Hülsenkörper (2, 2', 2").

7. Rohranordnung (1, 1', 1ʺ, 1‴) nach einem der vorstehenden Ansprüche,
**dadurch gekennzeichnet, dass** die mittels des Verbindungsmittels (14, 14') ausgebildeten Verbindungsbereiche einen Abstand zum jeweiligen Ende des Rohrabschnittes (6, 6') aufweisen, der größer ist als der Abstand des Dichtelementes (12, 12', 12") zum Ende des Rohrabschnittes (6, 6').

8. Rohranordnung (1, 1', 1ʺ, 1‴) nach einem der vorstehenden Ansprüche,
**dadurch gekennzeichnet, dass** das Verbindungsmittel in Umfangsrichtung des Rohrabschnittes (6,6') sich im Wesentlichen in axialer Richtung erstreckende Kühlkanäle aufweist.

9. Rohranordnung (1, 1', 1ʺ, 1‴) nach einem der vorstehenden Ansprüche,
**dadurch gekennzeichnet, dass** auf der Außenfläche des Hülsenkörpers (2) eine Isolierung angeordnet ist.

10. Feuerlöschanlage mit einem Rohrleitungssystem aus mehreren miteinander fluidleitend verbundenen medienführenden Rohrleitungen, wobei der Verbindungsbereich wenigstens zweier miteinander verbundener Rohrleitungen mittels einer Rohranordnung (1, 1', 1ʺ, 1‴) nach einem der Ansprüche 1 bis 9 ausgebildet ist.

11. Rohrverbinder für eine Rohranordnung (1, 1', 1ʺ, 1‴) eines Rohrleitungssystems einer Feuerlöschanlage mit miteinander verbundenen medienleitenden Rohrabschnitten, wobei der Rohrverbinder aufweist:
- einen Hülsenkörper (2, 2', 2"), der einen ersten Endabschnitt (4) zur Aufnahme eines ersten Rohrabschnitts der Rohranordnung und einen zweiten Endabschnitt (4') zur Aufnahme eines zweiten Rohrabschnitts der Rohranordnung aufweist,
- wobei der Hülsenkörper (2, 2', 2") eine Innenseite (8) aufweist, an der vorzugsweise ein Dichtelement (12, 12', 12") angeordnet ist,
**dadurch gekennzeichnet, dass**
- an der Innenseite (8) des Hülsenkörpers (2, 2', 2") ein Verbindungsmittel (14, 14') angeordnet ist, das zur Verbindung mit einer Außenfläche des jeweiligen Rohrabschnitts eingerichtet ist, wobei das Verbindungsmittel (14, 14′)
- einen Transport- und/oder Lagerzustand aufweist, in dem eine Relativbewegung zwischen den Rohrabschnitten (6, 6') und dem Hülsenkörper (2, 2', 2") möglich ist, und
- dazu eingerichtet ist, mittels Aktivierung von dem Transport- und/oder Lagerzustand in einen Verbindungszustand überzugehen und zwischen dem Hülsenkörper (2, 2', 2") und den Rohrabschnitten (6, 6') eine Schweißverbindung auszubilden, in dem das Verbindungsmittel (14, 14') die Außenfläche (10) des jeweiligen Rohrabschnitts mit der Innenseite (8) des Hülsenkörpers (2, 2', 2") stoffschlüssig verbindet.

12. Verfahren zum Herstellen einer Rohranordnung (1, 1', 1ʺ, 1‴) von zwei miteinander zu verbindenden Rohrleitungen eines Rohrleitungssystems einer Feuerlöschanlage, wobei die Rohranordnung nach einem der Ansprüche 1 bis 9 ausgebildet ist, mit den folgenden Schritten
- Bereitstellen zumindest eines Rohrabschnittes und eines Hülsenkörpers zum abschnittsweisen Aufnehmen des Rohrabschnittes (6, 6'),
- Fügen des Rohrabschnittes (6, 6') mit dem Hülsenkörper (2, 2', 2"),
- Aktivieren eines auf einer Innenseite (8) des Hülsenkörpers (2, 2', 2") und/oder einer Außenfläche (10) des Rohrabschnittes (6, 6') angeordneten Verbindungsmittels (14, 14') vor oder nach dem Fügen und Überführen des Verbindungsmittels (14, 14′) von einem Transport- und/oder Lagerzustand in einen Verbindungszustand und Ausbilden einer Schweißverbindung zwischen dem Hülsenkörper (2, 2', 2") und den Rohrabschnitten (6, 6'), so dass die Innenseite des Hülsenkörpers (2, 2', 2") mit der Außenfläche des Rohrabschnittes (6, 6') mittels des aktivierten Verbindungsmittels (14, 14') zumindest partiell stoffschlüssig verbunden wird.

13. Verfahren nach Anspruch 12, umfassend den Schritt:
i) Fixieren des Rohrabschnittes (6, 6') und des Hülsenkörpers (2, 2', 2") zueinander nach dem Fügen des Rohrabschnittes (6, 6') mit dem Hülsenkörper (2, 2', 2") bis zum Einstellen der zumindest partiellen stoffschlüssigen Verbindung zwischen der Innenseite des Hülsenkörpers (2, 2', 2") und der Außenfläche des Rohrabschnittes (6, 6').

14. System zur Rohrinstallation, mit einem Rohrverbinder nach Anspruch 11 und einer Vorrichtung zum Fixieren (40) von zumindest einem Rohrabschnitt (6, 6') und einem mit dem Rohrabschnitt zu verbindenden Hülsenkörper (2) des Rohrverbinders, mit zumindest einem auf den Rohrabschnitt (6, 6') und den Hülsenkörper (2, 2', 2") einwirkenden Fixiermittel, das dazu eingerichtet ist, den Rohrabschnitt (6, 6') und den Hülsenkörper (2, 2', 2") in axialer Richtung und/oder in Umfangsrichtung ihrer einander zugewandten Innenseite und Außenfläche zumindest temporär zueinander festzulegen.

## Claims

1. Pipe arrangement (1, 1', 1ʺ, 1‴) of a pipeline system of a fire extinguishing system having interconnected media-conducting pipe sections, comprising
a sleeve body (2, 2', 2") which has at least one first end section (4) and a second end section (4'),
two pipe sections (6, 6′), wherein each pipe section (6, 6') is accommodated on an end section (4, 4') of the sleeve body (2, 2', 2"), and
a sealing element (12, 12', 12") arranged between an inner side (8) of the sleeve body (2, 2′, 2ʺ) and an outer surface (10) of the pipe section (6, 6'),
a connecting means (14, 14') arranged between the inner side of the sleeve body (2, 2', 2") and the outer surface of the pipe section (6, 6'),
wherein the connecting means (14, 14') has a transport and/or storage state in which a relative movement between the pipe sections (6, 6') and the sleeve body (2, 2', 2") is possible, and which can be brought by means of activation from the transport and/or storage state into a connecting state, wherein, in the connecting state, the connecting means (14, 14') is configured to connect an outer surface (10) of the respective pipe end to the inner side (8) of the sleeve body (2, 2', 2") by material bonding,
**characterized in that** the connecting means (14, 14') is configured to form a welded connection between the sleeve body (2, 2', 2") and the pipe sections (6, 6') by means of activation, wherein the connecting means (14, 14') is preferably a weldable plastic applied on the inner side of the sleeve body (2, 2', 2") and/or the outer surface of the pipe section (6, 6').

2. Pipe arrangement (1, 1', 1ʺ, 1‴) according to Claim 1,
**characterized in that** the connecting means (14, 14') is covered by a removable protective layer (15), wherein the protective layer is configured to shield the connecting means from external influences in the transport and/or storage state.

3. Pipe arrangement according to Claim 2,
wherein the protective layer is formed as a protective film that completely encloses the connecting means entirely, wherein the protective foil is preferably configured to be removed by the connecting means, while the pipe section is already inserted in the end section of the sleeve body (2, 2', 2").

4. Pipe arrangement according to Claim 2 or 3,
wherein the removable protective layer is at least one of
- airtight
- splash water repellent, or
- impermeable to UV radiation.

5. Pipe arrangement (1, 1', 1ʺ, 1‴) according to one of the preceding claims, **characterized in that** the sealing element (12, 12', 12") is arranged in a depression (20, 20') on the inner side (8) of the sleeve body (2, 2', 2") and/or on the outer surface (10) of the pipe section (6, 6').

6. Pipe arrangement (1, 1', 1ʺ, 1‴) according to one of the preceding claims, furthermore having a locking element for axially positioning the pipe sections (6, 6') with respect to the sleeve body (2, 2', 2").

7. Pipe arrangement (1, 1', 1ʺ, 1‴) according to one of the preceding claims, **characterized in that** the connecting regions formed by means of the connecting means (14, 14') are at a distance from the respective end of the pipe section (6, 6') that is greater than the distance of the sealing element (12, 12', 12") from the end of the pipe section (6, 6').

8. Pipe arrangement (1, 1', 1ʺ, 1‴) according to one of the preceding claims, **characterized in that**, in the circumferential direction of the pipe section (6, 6′), the connecting means has cooling ducts extending substantially in the axial direction.

9. Pipe arrangement (1, 1', 1ʺ, 1‴) according to one of the preceding claims, **characterized in that** an insulation is arranged on the outer surface of the sleeve body (2).

10. Fire extinguishing system with a pipeline system consisting of a plurality of media-guiding pipelines which are in fluid communication with one another, wherein the connecting region of at least two interconnected pipelines is formed by means of a pipe arrangement (1, 1', 1ʺ, 1‴) according to one of Claims 1 to 9.

11. Pipe connector for a pipe arrangement (1, 1', 1ʺ, 1‴) of a pipeline system of a fire extinguishing system with media-guiding pipe sections which are connected to each other, wherein the pipe connector comprises:
- a sleeve body (2, 2', 2") that comprises a first end section (4) for receiving a first pipe section of the pipe arrangement and a second end section (4') for receiving a second pipe section of the pipe arrangement,
- wherein the sleeve body (2, 2', 2") has an inner surface (8), and preferably a sealing element (12, 12′, 12ʺ)arranged on the inner side,
**characterized in that**
- a connecting means (14, 14') which is configured to connect to an outer surface of the respective pipe section, is arranged on the inner side (8) of the sleeve body (2, 2', 2"), wherein the connecting means (14, 14')
- has a transport and/or storage state in which a relative movement between the pipe sections (6, 6') and the sleeve body (2, 2', 2") is possible, and
- is configured to be activated from the transport and/or storage state into a connecting state and to form a welded connection between the sleeve body (2, 2', 2") and the pipe sections (6, 6'), in which state the connecting means (14, 14') connects the outer surface (10) of the respective pipe section to the inner surface (8) of the sleeve body (2, 2', 2") by material bonding.

12. Method for producing a pipe arrangement (1, 1', 1ʺ, 1‴) of two pipelines, to be connected to each other, of a pipeline system of a fire extinguishing system,
wherein the pipe arrangement is formed according to one of Claims 1 to 9, comprising the following steps
- providing at least one pipe section and a sleeve body for receiving the pipe section (6, 6') in sections,
- joining the pipe section (6, 6') to the sleeve body (2, 2', 2"),
- activating a connecting means (14, 14') which is arranged on an inner side (8) of the sleeve body (2, 2', 2") and/or on an outer surface (10) of the pipe section (6, 6'), before or after the joining and transfer of the connecting means (14, 14') from a transport and/or storage state into a connecting state and forming of a welded connection between the sleeve body (2, 2', 2") and the pipe sections (6, 6'), such that the inner side of the sleeve body (2, 2', 2") is at least partially connected, by material bonding, to the outer surface of the pipe section (6, 6') by means of the activated connecting means (14, 14').

13. Method according to Claim 12, comprising the step:
i) fixing the pipe section (6, 6') and the sleeve body (2, 2', 2") with respect to each other after the joining of the pipe section (6, 6') to the sleeve body (2, 2', 2") until the at least partial material bond between the inner side of the sleeve body (2, 2', 2") and the outer surface of the pipe section (6, 6') is set.

14. System for pipe installation, having a pipe connector according to claim 11 and an apparatus for fixing (40) at least one pipe section (6, 6') and a sleeve body (2) of the pipe connector to be connected to the pipe section to at least one fixing means which acts on the pipe section (6, 6') and the sleeve body (2, 2', 2") and is configured to secure the pipe section (6, 6') and the sleeve body (2, 2', 2") in the axial direction and/or in the circumferential direction of the mutually facing inner side and outer surface at least temporarily with respect to each other.

## Revendications

1. Ensemble de tuyaux (1, 1', 1ʺ, 1‴) d'un système de conduites d'une installation d'extinction d'incendie avec des tronçons de tuyau acheminant un liquide, reliés les uns aux autres, avec
un corps de douille (2, 2', 2''), qui présente au moins un premier tronçon d'extrémité (4) et un second tronçon d'extrémité (4'),
deux tronçons de tuyau (6, 6'), dans lequel chaque tronçon de tuyau (6, 6') est logé sur un tronçon d'extrémité (4, 4') du corps de douille (2, 2', 2''), et
un élément d'étanchéité (12, 12', 12ʺ) disposé entre un côté intérieur (8) du corps de douille (2, 2', 2ʺ) et une surface extérieure (10) du tronçon de tuyau (6, 6'),
avec un moyen de raccordement (14, 14') disposé entre le côté intérieur du corps de douille (2, 2', 2ʺ) et la surface extérieure du tronçon de tuyau (6, 6'),
dans lequel le moyen de raccordement (14, 14') présente un état de transport et/ou de stockage, dans lequel un déplacement relatif est possible entre les tronçons de tuyau (6, 6') et le corps de douille (2, 2', 2''), et qui peut être amené dans un état de raccordement au moyen de l'activation de l'état de transport et/ou de l'état de stockage, dans lequel le moyen de raccordement (14, 14') est mis au point dans l'état de raccordement pour raccorder par liaison de matière une surface extérieure (10) de l'extrémité de tuyau respective au côté intérieur (8) du corps de douille (2, 2', 2ʺ), **caractérisé en ce que** le moyen de raccordement (14, 14') est mis au point pour réaliser avec une activation entre le corps de douille (2, 2', 2ʺ) et les tronçons de tuyau (6, 6') un raccordement par soudage, dans lequel le moyen de raccordement (14, 14') est de préférence une matière plastique soudable appliquée sur le côté intérieur du corps de douille (2, 2', 2ʺ) et/ou la surface extérieure du tronçon de tuyau (6, 6').

2. Ensemble de tuyaux (1, 1', 1ʺ, 1‴) selon la revendication 1,
**caractérisé en ce que** le moyen de raccordement (14, 14') est recouvert par une couche de protection (15) retirable, dans lequel la couche de protection est mise au point pour protéger le moyen de raccordement dans l'état de transport et/ou de stockage des influences extérieures.

3. Ensemble de tuyaux selon la revendication 2, dans lequel la couche de protection est réalisée en tant que film de protection, lequel entoure en totalité le moyen de raccordement, dans lequel de préférence le film de protection est réalisé pour être retiré du moyen de raccordement tandis que le tronçon de tuyau est déjà enfilé dans le tronçon d'extrémité du corps de douille.

4. Ensemble de tuyaux selon la revendication 2 ou 3, dans lequel la couche de protection retirable est parmi les propositions suivantes au moins
- étanche à l'air,
- hydrofuge contre l'eau pulvérisée, ou
- imperméable au rayonnement UV.

5. Ensemble de tuyaux (1, 1′, 1ʺ, 1‴) selon l'une quelconque des revendications précédentes,
**caractérisé en ce que** l'élément d'étanchéité (12, 12', 12ʺ) est disposé dans un renfoncement (20, 20') sur le côté intérieur (8) du corps de douille (2, 2', 2ʺ) et/ou sur la surface extérieure (10) du tronçon de tuyau (6, 6').

6. Ensemble de tuyaux (1, 1', 1ʺ, 1‴) selon l'une quelconque des revendications précédentes,
présentant en outre un élément d'arrêt pour positionner axialement les tronçons de tuyau (6, 6') par rapport au corps de douille (2, 2', 2'').

7. Ensemble de tuyaux (1, 1', 1ʺ, 1‴) selon l'une quelconque des revendications précédentes,
**caractérisé en ce que** les zones de raccordement réalisées au moyen du moyen de raccordement (14, 14') présentent une distance par rapport à l'extrémité respective du tronçon de tuyau (6, 6') qui est plus grande que la distance de l'élément d'étanchéité (12, 12', 12ʺ) par rapport à l'extrémité du tronçon de tuyau (6, 6').

8. Ensemble de tuyaux (1, 1', 1ʺ, 1‴) selon l'une quelconque des revendications précédentes,
**caractérisé en ce que** le moyen de raccordement présente des canaux de refroidissement s'étendant sensiblement dans une direction axiale dans la direction périphérique du tronçon de tuyau (6, 6').

9. Ensemble de tuyaux (1, 1', 1ʺ, 1‴) selon l'une quelconque des revendications précédentes,
**caractérisé en ce qu'**une isolation est disposée sur la surface extérieure du corps de douille (2).

10. Installation d'extinction d'incendie avec un système de conduites composé de plusieurs conduites acheminant du liquide, en communication fluidique entre elles, dans laquelle la zone de raccordement d'au moins deux conduites raccordées l'une à l'autre est réalisée au moyen d'un ensemble de tuyaux (1, 1', 1ʺ, 1‴) selon l'une quelconque des revendications 1 à 9.

11. Connecteur de tuyaux pour un ensemble de tuyaux (1, 1', 1ʺ, 1‴) d'un système de conduites d'une installation d'extinction d'incendie avec des tronçons de tuyau acheminant du liquide, raccordés les uns aux autres, dans lequel le connecteur de tuyaux présente :
- un corps de douille (2, 2', 2''), qui présente un premier tronçon d'extrémité (4) pour loger un premier tronçon de tuyau de l'ensemble de tuyaux et un second tronçon d'extrémité (4') pour loger un second tronçon de tuyau de l'ensemble de tuyaux,
- dans lequel le corps de douille (2, 2', 2ʺ) présente un côté intérieur (8), sur lequel est disposé de préférence un élément d'étanchéité (12, 12', 12ʺ), **caractérisé en ce que**
- un moyen de raccordement (14, 14'), qui est mis au point pour être raccordé à une surface extérieure du tronçon de tuyau respectif, est disposé sur le côté intérieur (8) du corps de douille (2, 2', 2''), dans lequel le moyen de raccordement (14, 14')
- présente un état de transport et/ou de stockage, dans lequel un déplacement relatif est possible entre les tronçons de tuyau (6, 6') et le corps de douille (2, 2' , 2ʺ), et
- est mis au point pour passer au moyen d'une activation de l'état de transport et/ou de stockage dans un état de raccordement et pour réaliser un raccordement par soudage entre le corps de douille (2, 2', 2ʺ) et les tronçons de tuyau (6, 6'), dans lequel le moyen de raccordement (14, 14') raccorde par liaison de matière la surface extérieure (10) du tronçon de tuyau respectif au côté intérieur (8) du corps de douille (2, 2', 2'').

12. Procédé de fabrication d'un ensemble de tuyaux (1, 1', 1ʺ, 1‴) de deux conduites à raccorder l'une à l'autre d'un système de conduites d'une installation d'extinction d'incendie,
dans lequel l'ensemble de tuyaux est réalisé selon l'une quelconque des revendications 1 à 9, avec les étapes suivantes
- la fourniture d'au moins un tronçon de tuyau et d'un corps de douille pour loger par endroits le tronçon de tuyau (6, 6'),
- l'assemblage du tronçon de tuyau (6, 6') au corps de douille (2, 2', 2ʺ),
- l'activation d'un moyen de raccordement (14, 14') disposé sur un côté intérieur (8) du corps de douille (2, 2′, 2ʺ) et/ou sur une surface extérieure (10) du tronçon de tuyau (6, 6') avant ou après l'assemblage ou le passage du moyen de raccordement (14, 14') depuis un état de transport et/ou de stockage dans un état de raccordement et la réalisation d'un raccordement par soudage entre le corps de douille (2, 2', 2ʺ) et les tronçons de tuyau (6, 6') de telle sorte que le côté intérieur du corps de douille (2, 2', 2ʺ) est raccordé au moins en partie par liaison de matière à la surface extérieure du tronçon de tuyau (6, 6') au moyen du moyen de raccordement (14, 14') activé.

13. Procédé selon la revendication 12, comprenant l'étape :
i) le blocage du tronçon de tuyau (6, 6') et du corps de douille (2, 2', 2ʺ) l'un par rapport à l'autre après l'assemblage du tronçon de tuyau (6, 6') au corps de douille (2, 2', 2ʺ) jusqu'au réglage du raccordement par liaison de matière au moins partiel entre le côté intérieur du corps de douille (2, 2', 2ʺ) et la surface extérieure du tronçon de tuyau (6, 6').

14. Système d'installation de tuyaux, avec un connecteur de tuyaux selon la revendication 11 et un dispositif de blocage (40) d'au moins un tronçon de tuyau (6, 6') et d'un corps de douille (2) à raccorder au tronçon de tuyau, du connecteur de tuyaux, avec au moins un moyen de blocage agissant sur le tronçon de tuyau (6, 6') et le corps de douille (2, 2', 2''), qui est mis au point pour immobiliser au moins temporairement l'un par rapport à l'autre le tronçon de tuyau (6, 6') et le corps de douille (2, 2', 2ʺ) dans une direction axiale et/ou dans une direction périphérique de leur côté intérieur et de leur surface extérieure tournés l'un vers l'autre.
